Europäisches Patentamt

European Patent Office

Office européen des brevets

(11) Publication number: **0 504 344 A1**

# EUROPEAN PATENT APPLICATION
## published in accordance with Art. 158(3) EPC

(21) Application number: **91916741.1**

(22) Date of filing: **20.09.91**

(86) International application number:
**PCT/ES91/00056**

(87) International publication number:
**WO 92/06863 (30.04.92 92/10)**

(51) Int. Cl.⁵: **B60R  1/06**

(30) Priority: **11.10.90 ES 9002577**

(43) Date of publication of application:
**23.09.92 Bulletin  92/39**

(84) Designated Contracting States:
**DE FR GB**

(71) Applicant: **FICO MIRRORS, S.A.**
**Carretera Santa Inés, Km. 3.2**
**E-08440 Cardedeu(ES)**

(72) Inventor: **CABALLERO GUIRADO, Adolfo**
**Carrretera de Caldes, 76**
**F-08400 Granollers(ES)**

(74) Representative: **Marx, Lothar, Dr.**
**Patentanwälte Schwabe, Sandmair, Marx**
**Stuntzstrasse 16**
**W-8000 München 80(DE)**

(54) SPRING FIXING DEVICE FOR EXTERIOR RETRACTABLE REARVIEW MIRRORS OF MOTOR VEHICLES.

(57) The disclosed device is comprised of a retention washer *AR* arranged coaxially with the respect to the pin-guide (1) of the fixed support (2), which may be incorporated in the body of the motor vehicle, on which may rotate the tubular portion (4) of the mirror-holder frame (3). The retention washer *AR* is provided with fixing angular ribs (9) which protrude on one of the faces of the washer *AR*, and the pin-guide has grooves (7) in the same amount and position as the ribs (9), which grooves (7) present two sections *7a*, *7b* of different depth, thereby forming a transition step *7c* between both sections *7a*, *7b*. The retention washer *AR* may be coupled to the pin-guide (1) thereby compressing the retention spring (10), till the washer remains permanently secured by a clamping of the ribs (9) into the respective steps *7c*. Application to the car industry.

Fig. 2

## Field of the Invention

The object of this invention is a spring retaining device for external folding rearview mirrors for motor vehicles which, in particular, is applicable to external rearview mirrors which are provided, irrespective of the positioning of the mirror surface as such, with predetermined positions of use which may be selected by the vehicle driver.

## Background of the Invention

It is a wide practice for motor vehicles to be provided as original equipment with one or two rearview mirrors which, arranged on the outside of the vehicle, complement the function of the internal rearview mirror. In those vehicles, such as those for goods carriage in general, where the internal rearview mirror is not operational because of their size or purpose, its function is assumed by the external rearview mirrors.

It is usual in these cases for the external rearview mirrors to be substantially large in relation to the size of the motor vehicle and, consequently, they project out notably from the vehicle structure. The fact that the rearview mirrors extend outwardly causes substantial drawbacks when the vehicle has to manoeuver in small spaces or when other vehicles have to manoeuver close to it.

To solve the problem raised by the size of the external rearview mirrors, these are usually supplied from origin provided with a device allowing the rearview mirror to be folded away so that once folded away, it projects as little as possible from the vehicle structure.

Logically, the fact that the external rearview mirror may be folded away requires the said folding devices to be provided with means ensuring the working position selected by the driver. This working position may normally be selected from a limited number of positions which generally correspond with the driving position and the forward and backward folded positions which are used when the vehicle is parked.

The said folding devices are formed, generally speaking, of the following members:

- a fixed support which may be integrated in the motor vehicle structure and which' comprises a conical or cylindrical tubular extension which acts as a shaft for guiding and folding the mirror holding frame, and which hereinafter will be called guide shaft;
- a mirror holding frame comprising a tubular portion, generally open at both ends, dimensioned snugly to house to a sufficient extent the said guide shaft and rotate on the latter to the contemplated extent of folding;
- and, to set the working positions of the mirror holding frame when this is coupled to the support with the said guide shaft and tubular portion, a retaining spring disposed coaxially relative to the guide shaft so that one of the ends thereof presses against the mirror holding frame via the tubular extension and the other end presses against the free end of the guide shaft.

In this way the retaining spring presses the support and the mirror holding frame against each other and since both members are provided on the facing surfaces thereof with corresponding positioning protuberances and projections which operate in coordination, the retaining spring ensures that under normal conditions of use the mirror holding frame will not extemporaneously come out of the working position selected by the user.

Up to date, all the known solutions for fixing the retaining spring have been notably difficult to implement and/or assemble, with the resultant high cost and/or low operational reliability which causes frequent misoperation of the external rearview mirror folding device.

## Summary of the Invention

To provide a new solution simply and cheaply fixing the position of the above described folding device retaining spring with a high degree of operational reliability, there is disclosed a spring retaining device for external folding rearview mirrors for motor vehicles.

The device of the invention is characterized in that it is formed by a retaining washer disposed coaxially round the guide shaft of the fixed support which may be integrated in the motor vehicle structure. Said retaining washer and guide shaft act coordinatedly by way of corresponding mechanical means with which they are formed, so that when the mirror holding frame is coupled to the fixed support by way of the tubular portion and guide shaft they respectively comprise and the retaining spring and the retaining washer coaxially disposed on the said shaft, the end of the retaining spring closest to the free end of the guide shaft presses against the inner surface of the retaining washer while the other end of the spring presses against the free end of the tubular portion of the mirror holding frame, thereby urging the facing surfaces of the fixed support and of the mirror holding frame against each other.

The mechanical means allowing the coordinated action of the retaining washer and the fixed support guide shaft comprise:

- internally on the retaining ring, regularly disposed notches which form a like number of essentially trapezially shaped fixing projections the respective longer sides of which are tangentially disposed relative to an inside diameter relatively close to the outside diameter of the washer, while the respective shorter sides of the projections determine the theoretical inside diameter of the washer, the fixing projections being angularly inclined to a certain extent so that they project outwardly in an adequate distance from one of the sides of the washer;

- and, externally on the guide shaft, longitudinal slots which are in number and radial positioning equal to the fixing projections, extend uninterruptedly over a sufficient distance, each one being provided with two portions differentiated by their different depth, the depth of the portions starting at the free end of the guide shaft being shallow and the depth of the following portions being substantial, a pronounced shoulder being formed at the point of transition from one to the other.

The retaining washer may be engaged on the guide shaft at the free end thereof by aligning each of the projections with a respective longitudinal slot and may be pushed along the guide shaft, to which end the said projections become elastically deformed until they reach the shoulder where the respective deeper portion starts, where they spread freely and snap back to their original angle, thereby preventing the retaining washer from recoiling along and being disengaged from the guide shaft, by the engagement with the said shoulder.

The assembly of the device of the invention is extremely simple and is very reliable and consists of sliding the fixing projections of the retaining washer, once the mirror holding frame has been mounted over the fixed support and the retaining spring has been disposed coaxially around the support guide shaft, while elastically deforming them, along the shallow portions of the longitudinal slots of the support guide shaft, while simultaneously compressing the retaining spring, to the point where the fixing projections are permanently lodged by elastic deformation by recovering their initial angle on penetrating in the deeper portions of the said longitudinal slots and permanently engaging the transition shoulders.

## Brief Description of the Drawings

The spring fixing device for folding external rearview mirrors for motor vehicles is shown in the sheet of drawings of the present specification. In the drawings:

Figure 1 is a perspective view of the device of the invention.

Figure 2 is a part section view showing an assembly stage of the device of the invention.

Figure 3 is a front view of the retaining washer.

Figure 4 is a cross section view of the support guide shaft to which the mirror' holding frame is attached.

## Detailed Description of the Embodiment

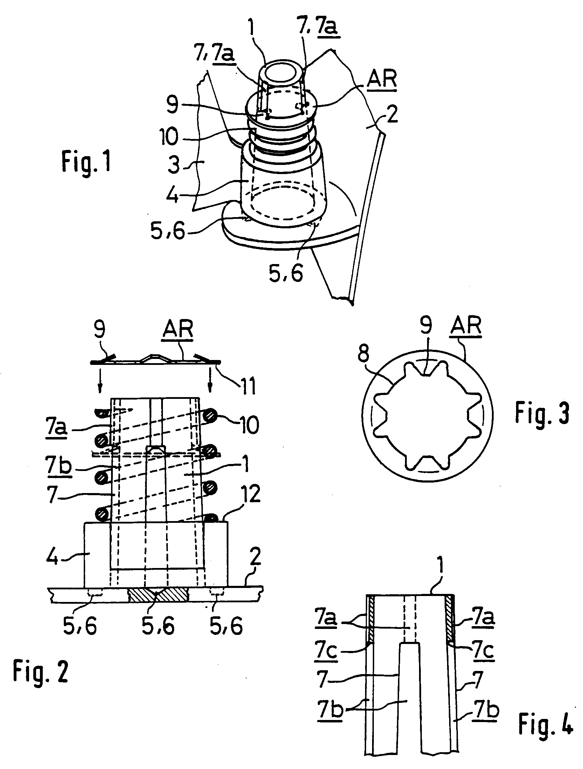

The spring fixing device for folding external rearview mirrors for motor vehicles of the invention, described as an embodiment, is composed, as shown in Figure 1, by the guide shaft 1 and by the retaining washer AR which mutually engage each other.

Figures 1 and 2 show how the guide shaft 1 is tubular and slightly tapering on the outside, although it may be perfectly cylindrical. The guide shaft 1 is a constituent part of the fixed support 2 which may be integrated in the motor vehicle structure.

On the other hand, Figure 1 shows how the mirror holding frame 3 is provided with a tubular portion 4 which may snugly receive the guide shaft 1 and rotate around it.

Both said members, the fixed support 2 and the mirror holding frame 3, are provided with recesses 5 and protuberances 6, respectively, which are for setting the working positions of the mirror holding frame 3. In fact, the recesses 5 and the protuberances 6 are functionally and dimensionally complementary, so that the protuberances 6 are housed in the recesses 5 of the fixed support 2 in those positions of the mirror holding frame in which, by rotation of the latter relative to the fixed support 2, such recesses 5 and protuberances 6 positionally mate.

The number of working positions of the mirror holding frame 3 will depend, therefore, on the number of recesses 5 that the fixed support 2 has operating coordinatedly with the protuberances 6 of the mirror holding frame 3. All the foregoing is known.

Figures 1 and 2, and particularly Figure 4, show how the guide shaft 1 is formed with longitudinal slots 7, four in this embodiment, which uninterruptedly are regularly distributed around the whole external surface. Each of said slots 7 comprises two portions 7a and 7b of different depth.

The portions 7a are superficial, i.e. shallow slots, while the portions 7b are through window-like slots, of a larger size than the said portions 7a, and above all deeper. The transition from the portion 7a and 7b of each slot 7 forms a shoulder 7c.

Figure 3 shows how the retaining washer AR is formed internally with four notches 8 defining four essentially trapezial fixing projections 9. The respective longer sides of the fixing projections 9 are tangential to an inside diameter relatively close to the outside diameter of the washer AR, while the respective shorter sides form the inside diameter of the washer AR.

Figure 2 shows how the four fixing projections 9 form a noticeable angle as projecting out from one of the sides of the retaining washer AR.

The sizing and distribution of the four fixing projections 9 of the retaining washer AR dimensionally and positionally mate with the longitudinal slots 7 formed in the guide shaft 1 of the fixed support 2.

The device of the invention is assembled and operates as follows:

- the mirror holding frame 3 and the fixed support 2 are coupled together by the tubular portion 4 and the guide shaft 1 formed on both elements, respectively, as shown in Figures 1 and 2;

- thereafter, the retaining spring 10 is mounted coaxially on the guide shaft 1 of the fixed support 2, as shown in Figures 1 and 2;

- thereafter, as shown in detail in Figure 2, the retaining washer AR is slid along the guide shaft 1, so that the fixing projections 9 of the washer AR, which engage with a respective longitudinal slot 7, slide elastically deformed along the portion 7a of the slot 7 of the guide shaft 1. Simultaneously, the sliding of the retaining washer AR compresses the retaining spring 10, reducing the length thereof;

- when the fixing projections 9 of the washer AR reach the through portions 7b of the longitudinal slots 7, the fixing projections 9 snap back to their initial angle and are lodged in the portions 7b without possibility of coming out of such lodging because of the permanent retaining action exercised in each slot 7 by the shoulder 7c thereof.

With the retaining washer AR engaged in this way with the guide shaft 1 of the fixed support 2, the retaining spring 10 permanently presses at one end thereof against the inner surface 11 of the washer AR and at the other end against the upper surface 12 of the tubular portion 4 of the mirror holding frame 3.

In this way, the fixed support 2 and the mirror holding frame 3 are urged against each other on the facing surfaces thereof by the retaining spring 10, which ensures that once the protuberances 6 of the mirror holding frame 3 are lodged in the positioning recesses 5 of the fixed support 2, thereby setting the corresponding working position of the said frame 3, the projections 6 may not come out of the lodging extemporaneously.

## Claims

1. A spring retaining device for external folding rearview mirrors for motor vehicles, characterized in that it is formed by a retaining washer (AR) disposed coaxially round the guide shaft (1) of the fixed support (2) which may be integrated in the motor vehicle structure, said retaining washer (AR) and guide shaft (1) acting coordinatedly by way of corresponding mechanical means with which they are formed, so that when the mirror holding frame (3) is coupled to the fixed support (2) by way of the tubular portion (4) and guide shaft (1) they respectively comprise and the retaining spring (10) and the retaining washer (AR) are coaxially disposed on the said shaft (1), the end of the retaining spring (10) closest to the free end of the guide shaft (1) presses against the inner surface of the retaining washer (AR) while the other end of the spring (10) presses against the free end of the tubular portion (4) of the mirror holding frame (3), thereby urging the facing surfaces of the fixed support (2) and of the mirror holding frame (3) against each other.

2. The spring retaining device for external folding rearview mirrors for motor vehicles of claim 1, characterized in that mechanical means allowing the coordinated action of the retaining washer (AR) and the fixed support (2) guide shaft (1) comprise:

- internally on the retaining washer (AR) regularly disposed notches (8) which form a like number of essentially trapezially shaped fixing projections (9) the respective longer sides of which are tangentially disposed relative to an inside diameter relatively close to the outside diameter of the washer (AR), while the respective shorter sides of the projections (9) determine the theoretical inside diameter of the washer (AR), the fixing projections being angularly inclined to a certain extent so that they project outwardly in an adequate distance from one of the sides of the washer (AR);

- and, externally on the guide shaft (1), longitudinal slots (7) which are in number and radial positioning equal to the fixing projections (9), extend uninterruptedly over a sufficient distance, each one being provided with two portions (7a, 7b) differentiated by their different depth, the depth of the portions (7a) starting at the free end of the guide shaft (1) being shallow and the depth of the following portions (7b) being substantial, a pronounced shoulder (7c) being formed at the point of transition of both portions (7a, 7b).

Fig. 1

Fig. 2

Fig. 3

Fig. 4

# INTERNATIONAL SEARCH REPORT

International Application No PCT/ES91/00056

| I. CLASSIFICATION OF SUBJECT MATTER (if several classification symbols apply, indicate all) ⁶ |
|---|
| According to International Patent Classification (IPC) or to both National Classification and IPC |
| Int. Cl.⁵ : B60R 1/06 |

## II. FIELDS SEARCHED

| Minimum Documentation Searched ⁷ | |
|---|---|
| Classification System | Classification Symbols |
| Int. Cl.⁵ | B60R |

| Documentation Searched other than Minimum Documentation<br>to the Extent that such Documents are Included in the Fields Searched ⁸ |
|---|
| |

## III. DOCUMENTS CONSIDERED TO BE RELEVANT ⁹

| Category * | Citation of Document, ¹¹ with indication, where appropriate, of the relevant passages ¹² | Relevant to Claim No. ¹³ |
|---|---|---|
| X | EP, A, 0079677 (BRITAX(WINGARD) LTD) 25 May 1983, see figure 1; page 3, lines 32-37 | 1 |
| A | | 2 |
| | --- | |
| X | WO, A, 8900518 (ICHIKOH INDUSTRIES, LTD) 26 January 1989, see figures 3 and 5; claims 1,2,5,12 | 1 |
| A | | 2 |
| | ------- | |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 21 November 1991 (21.11.91) | 7 January 1992 (07.01.92) |
| International Searching Authority | Signature of Authorized Officer |
| European Patent Office | |

Form PCT/ISA/210 (second sheet) (January 1985)